(19) Europäisches Patentamt
European Patent Office
Office européen des brevets

(11) EP 0 801 077 A2

(12) **EUROPÄISCHE PATENTANMELDUNG**

(43) Veröffentlichungstag:
**15.10.1997 Patentblatt 1997/42**

(51) Int. Cl.[6]: **C08B 11/20**, C08B 15/06

(21) Anmeldenummer: **97105181.8**

(22) Anmeldetag: **27.03.1997**

(84) Benannte Vertragsstaaten:
**AT DE FI FR GB IT SE**

(30) Priorität: **09.04.1996 DE 19613990**

(71) Anmelder: **WOLFF WALSRODE AG**
**D-29655 Walsrode (DE)**

(72) Erfinder:
- **Engelhardt, Jürgen, Dr.**
  **29683 Fallingbostel (DE)**
- **Simon, Joachim, Dr.**
  **40589 Düsseldorf (DE)**
- **Müller, Hanns-Peter, Dr.**
  **51519 Odenthal (DE)**
- **Koch, Rainhard, Dr.**
  **51065 Köln (DE)**
- **Dijkstra, Dirk-Jacques, Dr.**
  **41539 Dormagen (DE)**

(74) Vertreter: **Braun, Rolf, Dr. et al**
**Bayer AG,**
**Konzernbereich RP,**
**Patente und Lizenzen**
**51368 Leverkusen (DE)**

(54) **Thermoplastischer Werkstoff bestehend aus aliphatischen Carbamidsäurederivaten von Polysacchariden und niedermolekularen Harnstaffderivaten sowie ein Verfahren zu dessen Herstellung und Verwendung desselben**

(57) Die vorliegende Erfindung betrifft gleichmäßig substituierte Polysaccharidderivate der allgemeinen Struktur
Polysaccharid-O-R
wobei Polysaccharid-O eine substituierte oder unsubstituierte Polysaccharideinheit repräsentiert und R ein Substituent einer Polysaccharid-OH-Gruppe entweder mit der Struktur
R = -A-B-
oder mit der Struktur
R = -B-
ist, in der A eine lineare Polyetherkette folgender Struktur ist:
A = (-D-O-)n
in der D eine lineare aliphatische verzweigte oder unverzweigte Kette von 2 - 12 C-Atomen bedeutet, O ein Sauerstoffatom repräsentiert und n eine Zahl gleich oder größer als 1 ist, und
B repräsentiert eine substituierte Carbamidsäure der Struktur

B = 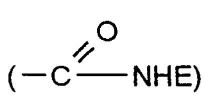

worin E eine lineare oder verzweigte aliphatische Kette von 1-18 C-Atomen bedeutet.

EP 0 801 077 A2

## Beschreibung

Die vorliegende Erfindung betrifft neue Werkstoffe aus thermoplastischen aliphatischen Polysaccharidcarbamidsäurederivaten, sowie aus Mischungen solcher Derivate mit niedermolekularen aliphatischen Harnstoffderivaten, die Herstellung solcher Derivate und Mischungen aus Polysacchariden oder Polysaccharidderivaten und aliphatischen Monoisocyanaten in einem geeigneten Lösungsmittel. Die erfindungsgemäßen Werkstoffe werden nach Entfernen der Lösungsmittel bevorzugt als thermoplastisches Material durch Spritzguß oder Extrusion verarbeitet. Es können Formteile, Fasern, Folien sowie auch Schäume oder Beschichtungen hergestellt werden.

Es ist bekannt, daß aus Polysacchariden, insbesondere aus Stärken oder Cellulosen durch Veresterung oder Veretherung der freien Hydroxylgruppen bei homogener Reaktionsführung thermoplastisch verarbeitbare Materialien hergestellt werden können (vergl. Enzyclopedia of Polymer Science and Technology Vol. 3, 1985).

Thermoplastische Materialien werden z.B. nach EP 626 392 entsprechend auch durch Veresterung von Polysaccharid-Hydroxyalkylethern gewonnen.

JP 142938 und Macromolecules 18, 1985, 1746-1752 beschreiben die Umsetzung von Celluloseethern mit Säurechloriden oder mit Carbonsäureanhydriden.

J. Appl. Polym. Sci. 52, 1994, 755-761 und J. Env. Polym. Degr. 3, 1995, 115-118 beschreiben die Herstellung von thermoplastischen Celluloseestern aus Cellulose und langkettigen ungesättigten Fettsäureestern in Pyridin / DMF.

Die thermoplastische Verarbeitbarkeit von Polysaccharidderivaten ist abhängig vom mittleren Substitutionsgrad der Anhydroglucose-Wiederholungseinheit, im Folgenden als DS bezeichnet, dieser beträgt bspw. bei thermoplastischen aliphatischen Celluloseesterderivaten mindestens ca. 2.0.

Zur thermoplastischen Verarbeitung müssen diesen Polysaccharidderivaten noch Hilfsmittel, speziell Weichmacher zugesetzt werden (F. Müller, Ch. Leuschke in. Becker/Braun: Kunststoff-Handbuch Bd 3/1: Hanser Verlag München 1992).

Während die Veretherung üblicherweise durch Reaktion von Alkalicellulose mit Epoxiden wie z.B. Ethylenoxid oder Propylenoxid in einem inerten Suspensionsmittel durchgeführt wird, werden Veresterungen üblicherweise in einem Lösungsprozeß mit Säuren als Lösungsmittel durchgeführt. Hierbei dient der Quellungsvorgang auch zur Aktivierung der Cellulose (Enzyclopedia of Polymer Science and Technology Vol. 3, 1985).

In vergleichbarer Weise gelingt die gleichmäßige Umsetzung von Polysacchariden mit substituierten Isocyanaten oder substituierten Isothiocyanaten ebenfalls nur bei einer guten Zugänglichkeit der Celluloseketten in homogener Lösung oder in Lösungsmitteln mit sehr starker Quellwirkung.

Acta Polymerica 32, 1981,172-176 beschreibt, daß trockene Cellulose ohne Lösungsmittel und weiteren Katalysator nicht in befriedigender Weise mit Isocyanaten reagiert. Reaktionen in Lösungsmitteln, die nicht in der Lage sind die Cellulose mindestens anzuquellen, ergeben keine ausreichenden Umsetzungen mit der Cellulose (Ang. Chem., 59, 1947, 257-288).

B. Polym. J., 18, 1986, 259-262 beschreibt die Umsetzung von Holzzellulose mit Alkylmonoisocyanaten. Die Urethanbildung bleibt auf die Oberfläche der Polysaccharidfasern beschränkt.

DE 2358808 beschreibt die auf die Oberfläche von Cellulosepulver beschränkte Reaktion mit langkettigen Mono-und Diisocyanaten.

L. Disserens gibt in "Neueste Fortschritte und Verfahren in der chemischen Technologie der Textilfasern", Birkhäuser Verlag, Stuttgart, 1957, eine Übersicht über die auf die Oberfläche beschränkten Reaktionen von Textilfasern mit Mono- und Diisocyanaten. Bevorzugt werden hierbei langkettige Alkylisocyanate zum Zwecke der Hydrophobisierung von Textilmaterial verwendet. Die GB 467 992 beschreibt die heterogene Umsetzung von Textilfasern welche vorher mit Alkylenoxiden umgesetzt worden sind mit Isocyanaten. Bei der in Benzin durchgeführten Reaktion kommt es jedoch zu keiner signifikanten Quellung der Cellulose.

Des weiteren können die mechanischen Eigenschaften von Papier durch Reaktion von Isocyanaten mit den Cellulosefasern beeinflußt werden (Acta Polymerica, 32, 1981, 172-176). Hierzu werden jedoch bevorzugt multifunktionelle Isocyanate, besonders bevorzugt Diisocyanate verwendet, die nicht Gegenstand der vorliegenden Erfindung sind.

Mittlere Umsetzungsgrade von Cellulose mit Isocyanaten werden mit Lösungsmitteln und Katalysatoren insbesondere dann erhalten, wenn die Cellulose in gequollenem Zustand vorliegt. Dies kann durch Verwendung eines geeigneten Lösungsmittels oder aber durch Verwendung eines Derivates der Cellulose bzw. eines Polysaccharids zusammen mit einem geeigneten Lösungsmittel erreicht werden. Die Ausbildung der Urethanbindung kann hierbei auch durch einen nachträglichen Backprozess hervorgerufen werden (Cell. Chem. Technol. 1, 1967, 23-32).

Die Quellung der Cellulose kann durch Anquellen in Wasser und nachfolgendes Austauschen gegen ein polares aprotisches Lösungsmittel erreicht werden.

Alternativ können auch direkt Lösungsmittel mit einer stark quellenden oder lösenden Wirkung für Cellulose wie DMAc, DMSO, DMAc/LiCl oder DMSO / Formaldehyd-Mischungen verwendet werden (US 4 129 451, US 4 129 640, US 4097 666). Übersichten über Lösungsmittelsysteme sind in Nevell und Zeronian: Cellulose chemistry and its applications, Wiley, N.Y. 1985, Acta. Polym. 36 (1985), 697-698 und Polymer news 15, (1990), 170-175 veröffentlicht.

Als gut quellende bzw. lösende Systeme beschrieben werden weiterhin z. B. Morpholin / Piperidin Mischungen (J. Appl. Polym. Sci, 22, (1978), 1243-1253

sowie Amin-N-oxide (Acta Polymerica, 39, (1988), 710-714, US 3 508 941) und Metallkation/ Lösungsmittel-Systeme wie Cu /NH3 oder Cd/Ethylendiamin (Polymer 31, (1990), 348-352).

Die Umsetzung von Phenylisocyanat mit Cellulose in DMSO / Paraformaldehyd Mischungen wird in J. Appl. Pol. Sci. 27, (1982), 673-685, J. Appl. Pol. Sci. 42, (1991), 821-827 und in Nevell und Zeronian: Cellulose chemistry and its applications, Wiley, N.Y. 1985 beschrieben.

Hohe Umsetzungsgrade werden speziell durch die Zugabe von Katalysatoren, durch eine entsprechend lange gewählte Reaktionsdauer oder durch erhöhte Temperatur begünstigt. Andererseits wird in DMAc, DMSO oder DMF als Quellungs- oder Lösungsmittel mit Aminen die Bildung von Isocyanuraten katalysiert (Eur. Polym. J., 26 (11) (1990) 1217-1220)

Nachstehende Patente und Veröffentlichungen beschreiben die Reaktion von löslichem Cellulosecetat mit Substitutionsgraden DS < 3.0 mit Isocyanaten, Isocyanat-Präpolymeren oder Isocyanat-funktionalisierten Polymeren oder -Oligomeren in homogener Lösung. Nach der Bildung des Urethans können die Acetatgruppen verseift und Urethanderivate der unsubstituierten Cellulose isoliert werden.

J. Macromol. Sci. Chem A 16 (1981) 473, Polym. Prepr. Am.Chem.Soc.Div.Poly.Chem. 20 (1979) 574, J.Poly.Sci.Polym.Lett.ed. 111(12) (1973) 731-735, Macromol. Synth. 7 101-105, Polymer 21 (1980) 648-650, Polym.Prepr. Am.Chem.Soc.Div.Poly.Chem.3 (1990) 642, US 395028).

Thermoplastisch verarbeitbare aliphatische Carbamate ausgehend von Polysacchariden oder Polysaccharid-Hydroxyalkylethern sind nicht bekannt.

Es ist Aufgabe der Erfindung, Reaktionsbedingungen für die Umsetzung von Polysaccharidderivaten, bevorzugt solche aus nachwachsenden Rohstoffen und Derivaten hiervon, mit Isocyanaten zu finden, so daß mittlere bis hohe Umsetzungsgrade resultieren. Hierzu war insbesondere eine Reaktion unter homogenen Bedingungen, d.h. eine Lösung des Polysaccharidderivates im Lösungsmittel, mindestens aber eine sehr starke Quellwirkung des Lösungsmittels erforderlich.

Es wurde nun überraschend gefunden daß Cellulosederivate, und insbesondere bevorzugt Cellulosealkylether die in den erfindungsgemäß verwendeten Lösungsmitteln nicht löslich oder stark quellbar sind, während der Reaktion mit Alkylmonoisocyanaten in Lösung gehen oder stark anquellen und dabei zu mittleren bis hohen Umsetzungsgraden führen.

Im einzelnen seien als Polysaccharidkomponenten beispielweise Hydroxypropylcellulose und Hydroxyethylcellulose genannt. Als Lösungsmittel können im erfindungsgemäßen Verfahren aprotische polare sowie unpolare Lösungsmittel, bevorzugt cyclische Ether oder substituierte Aromaten, besonders bevorzugt Dioxan und Toluol verwendet werden.

Weiterhin wurde überraschend gefunden, daß die Produkte A dieses erfindungsgemäßen Verfahrens thermoplastisch verarbeitbar sind und speziell die Nebenprodukte B des erfindungsgemäßen Verfahrens die thermoplastische Verarbeitbarkeit der erfindungsgemäßen Produkte verbessern. Dieses überraschende Ergebnis der erfindungsgemäßen Verfahrensweise war für den Fachmann nicht zu erwarten. Der Fachmann musste erwarten, daß sich die Nebenprodukte B beim nachträglichen thermoplastischen Verarbeiten zersetzen und störende gasförmige Zersetzungprodukte bilden.

Das molare Verhältnis der Komponenten A und B wird durch die Formel

$$0.01 < B/(A+B) < 0.5$$

wiedergegeben. Besonders bevorzugt wird es wenn das molare Verhältnis B/(A+B) mindestens 0.05 , insbesondere 0.1-0.2 beträgt. Wird der Grenzwert von 0.5 in obiger Formel überschritten, d.h. der Anteil des Nebenproduktes angehoben, besitzt das Produkt keine mechanischen Eigenschaften mehr die einen praktischen Produkteinsatz ermöglichen.

Die erfindungsgemäße Funktion des Nebenproduktes B ist nur gegeben, wenn die Schmelztemperatur von B kleiner als die Verarbeitungstemperatur ist.

Die neuen Verbindungen entsprechend der allgemeinen Struktur:

Polysaccharid-O-R

wobei Polysaccharid-O eine substituierte oder unsubstituierte Polysaccharideinheit repräsentiert und R ein Substituent einer Polysaccharid-OH-Gruppe entweder mit der Struktur

R = -A-B-

oder mit der Struktur

R = -B-

ist, in der A eine lineare Polyetherkette folgender Struktur ist:

A = (-D-O-)n

in der D eine lineare aliphatische verzweigte oder unverzweigte Kette von 2 - 12 C-Atomen bedeutet, O ein Sauerstoffatom repräsentiert und n eine Zahl gleich oder größer als 1 ist.

B repräsentiert eine substituierte Carbamidsäure der Struktur

B = 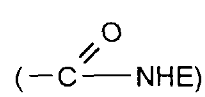

worin E eine lineare oder verzweigte aliphatische Kette von 1 - 18 C-Atomen bedeutet.

Gegenstand der Erfindung sind somit thermoplastisch verarbeitbare Urethanderivate von Polysacchariden bzw. Polysaccharidethern, die mit Isocyanaten oder blockierten Isocyanaten zu mittleren Substitutionsgraden (bezogen auf die Anhydroglucoseeinheit) von DS = 0.3 - 3.0 bevorzugt 0.6 - 2.5 umgesetzt wurden.

Gegenstand der Erfindung ist auch die Mischung

der erfindungsgemäßen Polysaccharidurethanderivate mit niedermolekularen symmetrischen und unsymmetrischen aliphatischen Harnstoffderivaten, mit Kettenlängen von 1 - 20 Kohlenstoffatomen.

Gegenstand der Erfindung ist weiterhin ein Verfahren zur Herstellung von derartigen thermoplastischen Polysaccharidurethanen, Polysaccharidetherurethanen sowie Gemischen hiervon mit niedermolekularen Harnstoffderivaten, das dadurch gekennzeichnet ist, daß das Polysaccharid oder der Polysaccharidether in einem Nichtlösungsmittel mit einem geeigneten Katalysator vorgelegt wird und dann mit einem Isocyanat in das entsprechende Urethan überführt wird, wobei die so entstehenden Polysaccharidurethane oder Polysaccharidetherurethane, sowie die niedermolekularen Harnstoffderivate in dem verwendeten Lösungs- bzw. Suspensionsmittel löslich sind. Die Isolierung des Produktes kann im erfindungsgemäßen Verfahren über eine Fällung oder durch eine Ausdampfextrusion erfolgen.

Zur Synthese wird ein Cellulosederivat in einem Suspensionsmittel unter Rückfluß erwärmt und nach Zugabe eines Katalysators die Isocyanatverbindung zugetropft. Hierbei ist es als überraschend anzusehen, daß das Isocyanat mit dem Polysaccharid oder dem Polysaccharidether in einer fest-flüssig Zweiphasenreaktion in Standard-Suspensionsmitteln reagiert. In Suspensionsmitteln wie Dioxan und Toluol gehen die Reaktionsprodukte während der Reaktion in Lösung und können durch Destillation oder Fällung in Nichtlösungsmitteln z.B. mit Wasser, Aceton oder Alkanen isoliert werden.

Durch die Stöchiometrie und den Verlauf der Reaktion läßt sich der Grad der Umsetzung des Polysaccharidderrvates in weiten Grenzen einstellen. Für einer thermoplastische Verarbeitbarkeit des Materials ist hierbei ein Substitutionsgrad, der größer als 0.5 ist ausreichend. Polysaccharide und Polysaccharidderivate können bei Normaldruck und Raumtemperatur Wasser in einem niedrigen Gewichtsanteil enthalten. Die Nebenreaktion der Isocyanatverbindungen mit Wasser führt zu Bildung von Nebenprodukten, unter denen sich bevorzugt disubstituierte Harnstoffe befinden. Das Ausmaß der Bildung der Nebenprodukte hängt hierbei stark vom Wassergehalt der Reaktionslösung ab. Diese Nebenprodukte weisen Schmelztemperaturen < 200°C auf und führen, wenn sie bei der Aufarbeitung des Polysaccharidderivate nicht entfernt werden, zu einer deutlichen Verbesserung der thermoplastischen Verarbeitbarkeit des Produktes. Dieses Ergebnis ist für den Fachmann überraschend und nicht vorhersagbar.

Für die Synthese sind technisch zugängliche Polysaccharidderivate beliebigen Molgewichts geeignet.

Werden Polysaccharidether, insbesondere Celluloseether eingesetzt, eignen sich Celluloseether wie Methylcellulose, Ethylcellulose oder Benzylcellulose mit durchschnittlichen Substitutionsgraden kleiner oder gleich 2.5, Hydroxyethylcellulose, Hydroxypropylcellulose, Dihydroxypropylcellulose, Hydroxybutylcellulose, Methylhydroxyethylcellulose, Methylhydroxypropylcellulose, Methylhydroxybutylcellulose, Ethylhydroxypropylcellulose, Ethylhydroxyethylcellulose, Carboxyalkylcellulose, Sulfoalkylcellulose, Cyanoethylcellulose und deren Mischether.

Als Suspensions- bzw. Lösungsmittel eignen sich Ketne wie z.B Methylethylketon, Ether und cyclische Ether wie z.B. Dimethoxyethan, Dimethoxymethan, Dimethylether, Diethylenglykoldimethylether, Dioxan und Tetrahydrofuran, Acetale, Kohlenwasserstoffe und polare aprotische Verbindungen wie Dimethylsulfoxid, Dimethylformamid, Dimethylacetamid, N-Methylmorpholin, N-Methylpyrrolidon, Trialkylphosphat, Essigester sowie unpolare aprotische Lösungsmittel wie Toluol. Bevorzugt werden Dioxan und Toluol.

Als Isocyanatverbindungen eignen sich alphatische lineare und verzweigte Monoisocyanate mit gesättigter oder ungesättigter Alkylkette wie z.B. Methylisocyanat, Ethylisocyanat, Propylisocyanat, Isopropylisocyanat, Butylisocyanat, Pentylisocyanat, Hexylisocyanat, Heptylisocyanat, Octylisocyanat, Nonylisocyanat, Decylisocyanat, Undecylisocyanat, Dodecylisocyanat, Tetradecylisocyanat, Hexadecylisocyanat, Octadecylisocyanat die entsprechenden Isothiocyanate sowie beliebige Mischungen aus den genannten Monoisocyanaten und Isothiocyanaten.

Als Katalysatoren für die Reaktion eignen sich Amine, besonders sterisch gehinderte tertiäre organische Amine wie Trimethylamin, Triethylamin, Tributylamin, Tetramethylendiamin, Pyridin, N,N-Dimethylcyclohexyldiamin, N,N-Dimethylbenzylamin, 4-Pyrilidinopyridin, Permethyldiethylentramin, 1,4-Diazabicyclo(2.2.2)octan, 1,8-Diazabicyclo(5.4.0)undec-7-en, 1,5-Diazabicyclo(4.3.0)non-5-en sowie beliebige Mischungen aus ihnen.

Ebenso geeignet sind die in der Polyurethanchemie gebräuchlichen Katalysatoren wie z.B. Organozinnverbindungen.

Bei der Katalyse wirkt sich die einzusetzende Menge an Amin auf den Derivatisierungsgrad des Polysaccharids aus. Zur Umsetzung mit dem Polysaccharidderivat wird das Amin im molaren Verhältnis zum Polysaccharid von 0,01 bis 3, bevorzugt von 0.1 bis 1 eingesetzt.

Die Reaktionstemperatur des Polysaccharidderivats mit dem Isocyanat beträgt 20 bis 150°C, vorzugsweise 40 bis 130°C, besonders bevorzugt 50 bis 120°C. Die Reaktionszeiten betragen 0,5 bis 16 Stunden, vorzugsweise 0,5 bis 8 Stunden, besonders bevorzugt 0,5 bis 4 Stunden.

Die nach dem erfindungsgemäßen Verfahren zugänglichen Polysaccharidetherester sind löslich oder stark quellbar in organischen Lösemitteln wie Dioxan, Tetrahydrofuran, Toluol, Methlylenchlorid, Chloroform.

Weiterhin sind diese Verbindungen nach Entfernen der Lösemittel thermoplastisch verarbeitbar und mit den herkömmlichen Verarbeitungstechniken wie Extrusion in z. B. Spritzgußformteile, Folien oder Fasern überführbar.

Das erfindungsgemäße Verfahren ist weiterhin dadurch gekennzeichnet, daß sich abhängig vom Wassergehalt der Polysacharidkomponente während der Reaktion Nebenprodukte, besonders bevorzugt Dialkylharnstoffe, bilden. Der Verbleib dieser Nebenprodukte im Produkt verbessert die thermoplastische Verarbeitbarkeit der Celluloseetherurethanderivate.

Die erfindungsgemäßen Polysaccharidderivate und ihre Mischungen mit niedermolekularen Harnstoffderivaten sind geeignet zur Herstellung von Beschichtungen, Fasern, Pulvern, Folien, Schäumen und Formkörpern. Sie können in ihren Eigenschaften durch die Herstellung von Blends beliebiger Zusammensetzung mit anderen Komponenten, wie z. B. Polysacchariden und Polysaccharidderivaten oder Polyurethanen variiert werden. Die Kombination mit Weichmachern, Brandschutzmitteln, Pigmenten und Verarbeitungshilfsmitteln wie z.B. langkettigen Fettsäureamiden ist dabei ebenfalls möglich. Speziell die Zugabe von Weichmachern wie z.B. Triethylenglykol, Milchsäureestern oder Weinsäureestern verbessert die thermoplastische Verarbeitbarkeit und ermöglicht die Verarbeitung auch bei niedrigen Substitutionsgraden wie z.B. DS = 0.6.

Der Gegenstand der vorliegenden Erfindung soll anhand der vorliegenden Beispiele noch näher erläutert werden.

**Beispiele**

1. Vergleichsbeispiel:

0.05 mol Holzzellstoff (Pn = 1200), sowie 0.025 mol Triethylamin werden in 500 g Dioxan 30 Min. am Rückfluß gekocht. Anschließend wird 0.15 mol Stearoylisocyanat zugetropft, die Suspension 9 h am Rückfluß gerührt, aus Acetonitril gefällt, abgesaugt, mit Aceton gewaschen und im leichten Vakuum getrocknet. Es ergibt sich ein inhomogenes, thermisch nicht erweichbares Produkt.

2. Vergleichsbeispiel

0.05 mol Holzzellstoff (Alistaple), sowie 0.025 mol Triethylamin werden in 300 g Dioxan 30 Min. am Rückfluß gekocht. Anschließend wird 0.15 mol Stearoylisocyanat zugetropft, die Suspension 9 h am Rückfluß gerührt, aus Acetonitril gefällt, abgesaugt, mit Aceton gewaschen und im leichten Vakuum getrocknet. Es ergibt sich ein inhomogenes, thermisch nicht erweichbares Produkt.

Erfindungsgemäßes Verfahren:

**Beispiel 1**

0.025 mol Hydroxypropylcellulose (DS 0.9) sowie 0.0125 mol Triethylamin werden in 150 g Dioxan 30 Min. am Rückfluß gekocht. Anschließend wird 0.05 mol Stearoylisocyanat zugetropft und die Suspension 9 h am Rückfluß gerührt. Dabei entsteht eine hochviskose klare Lösung. Das Produkt wird aus Acetonitril gefällt, abgesaugt, mit Aceton gewaschen und im leichten Vakuum getrocknet. Es ergibt sich mit 93% Ausbeute ein weißes Produkt, welches bei 210°C eine niedrigviskose Schmelze bildet und Bis-Stearoylharnstoff enthält (FT-IR: C=O Streckschwingung Urethan 1720 cm-1; : C=O Streckschwingung Harnstoff 1615 cm-1, ; N-H Deformationsschwingung Harnstoff 1575 cm-1) Zur Kontrolle der IR-Spektren wurde Bis-Stearoylharnstoff direkt durch Umsetzung von 0.05 mol Stearoylisocyanat mit 0.1 mol Wasser in 100 g Dioxan hergestellt, der ausgefallene Harnstoff abfiltriert und das FT-IR Spektrum aufgenommen: (FT-IR: C=O Streckschwingung Harnstoff 1615 cm-1; N-H Deformationsschwingung Harnstoff 1575 cm-1)

Aus dem Bis-Stearoylharnstoff enthaltenden Produkt wurde bei 200°C und 200 bar eine glasklare Folie gepresst, die durch einen E-Modul von 340 MPA, eine Reißdehnung von 22 % und eine Reißfestigkeit von 10 MPa charakterisiert ist.

Der Bis-Stearoylharnstoff kann durch Soxleth-Extraktion mit Cyclohexan quantitativ entfernt werden. Das resultierende Hydroxypropylcellulosestearoylcarbamat besitzt einen durch 13-C-NMR (CP-MAS) bestimmten Substitutionsgrad pro Anhydroglucose Wiederholungseinheit von DS = 1.4 und schmilzt bei 210°C.

**Beispiel 2**

0.025 mol Hydroxypropylcellulose (DS 0.9), 0.0125 mol Triethylamin werden mit 0.075 mol Stearoylisocyanat gemäß Beispiel 1 umgesetzt. Nach der Extraktion resultiert ein Hydroxypropylcellulosestearoylcarbamat mit DS 1.8. Das Produkt schmilzt bei 210°C.

**Beispiel 3**

0.025 mol Hydroxypropylcellulose (DS 0.9), 0.0125 mol Triethylamin werden mit 0.075 mol Dodecylisocyanat gemäß Beispiel 1 umgesetzt. Nach der Extraktion resultiert ein Hydroxypropylcellulosedodecylcarbamat mit DS 1.3. Das Produkt schmilzt bei 200°C.

**Beispiel 4**

0.025 mol Hydroxypropylcellulose (DS 0.9), 0.0125 mol Triethylamin werden mit 0.075 mol Butylisocyanat gemäß Beispiel 3 umgesetzt. Das Reaktionsprodukt wird aus Acetonitril gefällt und enthält keine im IR-Spektrum nachweisbaren Mengen an Dibutylharnstoff, so daß eine Extraktion entfällt. Das Produkt schmilzt bei 240°C, und besitzt einen DS 1.4. Durch Zugabe eines geeigneten Weichmachers wie z.B.Triethylenglykol kann die thermoplastische Verarbeitung bei Temperaturen < 200°C erfolgen.

## Patentansprüche

1. Gleichmäßig substituierte Polysaccharidderivate der allgemeinen Struktur
Polysaccharid-O-R
wobei Polysaccharid-O eine substituierte oder unsubstituierte Polysaccharideinheit repräsentiert und R ein Substituent einer Polysaccharid-OH-Gruppe entweder mit der Struktur
R = -A-B-
oder mit der Struktur
R = -B-
ist, in der A eine lineare Polyetherkette folgender Struktur ist:
A = (-D-O-)n
in der D eine lineare aliphatische verzweigte oder unverzweigte Kette von 2 - 12 C-Atomen bedeutet, O ein Sauerstoffatom repräsentiert und n eine Zahl gleich oder größer als 1 ist, und
B repräsentiert eine substituierte Carbamidsäure der Struktur

B = 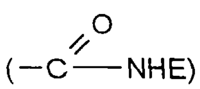

worin E eine lineare oder verzweigte aliphatische Kette von 1-18 C-Atomen bedeutet.

2. Thermoplastisch verarbeitbare Urethanderivate von Polysacchariden bzw. Polysaccharidethern gemäß Anspruch 1, dadurch gekennzeichnet, daß sie mit Isocyanaten oder blockierten Isocyanaten zu mittleren Substitutionsgraden (bezogen auf die Anhydroglucoseeinheit) von DS = 0.3 - 3.0 bevorzugt 0.6 - 2.5 umgesetzt wurden.

3. Mischungen der Polysaccharidurethanderivate gemäß Anspruch 2, mit niedermolekularen symmetrischen und unsymmetrischen aliphatischen Harnstoffderivaten, sowie Mischungen derselben mit Kettenlängen von 1 - 20 Kohlenstoffatomen.

4. Verfahren zur Herstellung von derartigen thermoplastischen Polysaccharidderivaten gemäß einem der Ansprüche 1 - 3, dadurch gekennzeichnet, daß das Polysaccharid oder der Polysaccharidether in einem Nichtlösungsmittel mit einem geeigneten Katalysator vorgelegt wird und dann mit einem Isocyanat in das entsprechende Urethan überführt wird, wobei die so entstehenden Polysaccharidurethane oder Polysaccharidetherurethane, sowie die niedermolekularen Harnstoffderivate in dem verwendeten Lösungs- bzw. Suspensionsmittel löslich sind.

5. Verwendung der Polysaccharidderivate nach einem der Ansprüche 1 - 3 zur Herstellung von Beschichtungen, Fasern, Folien, Schäumen und Formkörpern jeglicher Art.